# EUROPÄISCHE PATENTSCHRIFT

(11) **EP 1 519 147 B1**
(45) Veröffentlichungstag und Bekanntmachung des Hinweises auf die Patenterteilung: **04.01.2012**
(21) Anmeldenummer: 04104525.3
(22) Anmeldetag: 20.09.2004
(51) Int. Cl.: G01C 15/00, G02B 27/10, G02B 27/14

(54) **Optischer Strahlteiler**
Optical beamsplitter
Séparateur de faisceau

(30) Priorität: 25.09.2003 DE 10344472
(43) Veröffentlichungstag der Anmeldung: 30.03.2005
(73) Patentinhaber: HILTI Aktiengesellschaft, 9494 Schaan (LI)
(72) Erfinder: Dang, Lieu-Kim, 9494, Schaan (LI); Waibel, Reinhard, 9442, Berneck (CH)
(74) Vertreter: Wildi, Roland

(56) Entgegenhaltungen:
- EP-A- 1 469 282
- US-B1- 6 327 090
- US-B2- 6 546 636
- PATENT ABSTRACTS OF JAPAN Bd. 1998, Nr. 08, 30. Juni 1998 (1998-06-30) -& JP 10 062173 A (KAWAGUCHI KOGAKU SANGYO:KK), 6. März 1998 (1998-03-06)

## Beschreibung

Die Erfindung bezeichnet einen optischen Strahlteiler vorzugsweise für optische Positioniergeräte wie Mehrachsbaulaser oder Rotationsbaulaser.

Bei Markierungsanwendungen zur Ausrichtung von Werkzeugen und dem Anzeichnen von Werkstücken werden insbesondere im Baugewerbe definiert begrenzte, gut sichtbare und hinreichend helle Lichtmarken benötigt, die einen definierten Bezugswinkel ausbilden, beispielsweise in einem nivellierten kartesischen Koordinatensystem eines Mehrachsbaulasers.

Strahlteiler sind optische Bauelemente, deren optisch reflektierende Flächen zumindest teilweise eben ausgebildet sind und somit einen fokussierten Lichtstrahl diskret ablenken bzw. ein paralleles Lichtstrahlenbündel diskret aufteilen.

Hingegen sind Zylinderlinsen optische Bauelemente, deren optisch brechende Flächen zumindest teilweise zylindermantelförmig ausgebildet sind und somit einen fokussierten Lichtstrahl innerhalb einer Ebene stetig ablenken bzw. ein paralleles Lichtstrahlenbündel stetig aufweiten. Durch die Zylinderform nimmt die Intensität für transmittiertes, parallel polarisiertes Licht in Randnähe und somit des abgelenkten Linienstrahls mit zunehmendem Aufweitungswinkel steil ab, wobei ein Ablenkwinkel von 90° praktisch nicht erreichbar ist. Zudem verhindern Beugungseffekte eine scharf definierte Begrenzung des Ablenkwinkels.

Nach der US5363469 weist eine prismatische Linse einen zylindermantelförmig ausgebildeten Zentralbereich und zwei konkave Seitenbereiche auf, die durch innenseitige Totalreflektion von Randteilen des Lichtstrahlenbündels den Aufweitungswinkel definiert einschränken, ohne das Lichtstrahlenbündel in diskrete Teilstrahlenbündel aufzuteilen.

Nach der US543730 weist ein optischer Strahlteiler für ein längs einer Strahlachse paralleles Lichtstrahlenbündel einen planparallelen transparenten Zentralbereich und mehrere, zur Strahlachse jeweils um 45° geneigte, reflektierende Reflektorflächen auf, wodurch zueinander senkrechte Punktstrahlen erzeugbar sind.

Nach der US6327090 weist ein optischer Strahlteiler für ein längs einer Strahlachse paralleles Lichtstrahlenbündel einen transparenten Zentralbereich und mehrere, zur Strahlachse unter 45°geneigte, reflektierende Reflektorflächen auf, wodurch maximal fünf Punktstrahlen, die senkrecht zueinander oder in entgegengesetzte Richtungen verlaufen, erzeugbar sind. Der optische Strahlteiler eignet sich nicht dazu, einen in einer Ebene stetig aufgeweiteten Linienstrahl zu erzeugen.

Nach der JP10062173 weist ein optischer Strahlteiler für ein längs einer Strahlachse paralleles Lichtstrahlenbündel drei Zylinderlinsen auf, die eine invertierte T-Form bilden, wobei zwei Zylinderlinsen in einer horizontalen Richtung und die dritte Zylinderlinse in einer vertikalen Richtung angeordnet sind. Die Zylinderlinsen erzeugen zwei sich unter einem Winkel schneidende, stetig aufgeweitete Linienstrahlen. Der optische Strahlteiler eignet sich nicht dazu, mehrere Punktstrahlen zu erzeugen.

Zudem wird nach der US6005719 in einem Mehrachsbaulaser das parallele Lichtstrahlenbündel mit Strahlteilergittern innerhalb zweier, zueinander senkrechten Ebenen diskret abgelenkt, wodurch zwei Reihen diskret geteilter Punktstrahlen entstehen. Die Verwendung einer zudem offenbarten Zylinderlinse zur stetigen Aufweitung eines fokussierten Lichtstrahls innerhalb einer Ebene wird als nachteilig dargestellt.

Zudem wird nach der US5838431 in einem Rotationsbaulaser das parallele Lichtstrahlenbündel mit einer prismatischen Kombilinse mit einem planparallelen transparenten Bereich und einem daran glatt angrenzenden zylindersegmentförmigen Bereich innerhalb einer Ebene stetig als Linienstrahl mit einer höheren Helligkeit längs der Achse aufgeweitet. Eine diskrete Aufteilung des Lichtstrahlenbündels in definiert abgelenkte Punktstrahlen ist nicht möglich.

Die Aufgabe der Erfindung besteht in der Realisierung eines optischen Strahlteilers zur Erzeugung mehrerer diskreter Punktstrahlen mit einem definierten Bezugswinkel sowie eines in einer Ebene stetig aufgeweiteten Linienstrahls.

Die Aufgabe wird im Wesentlichen durch die Merkmale der unabhängigen Ansprüche gelöst. Vorteilhafte Weiterbildungen ergeben sich aus den Unteransprüchen.

So weist ein optischer Strahlteiler für ein längs einer Strahlachse paralleles Lichtstrahlenbündel einen transparenten Zentralbereich und mehrere, zur Strahlachse jeweils um einen Reflektorwinkel geneigte, reflektierende Reflektorflächen zur Erzeugung von je einem diskreten Punktstrahl auf. Erfindungsgemäß weist der Zentralbereich eine strahlaufweitende diffraktive Optik auf, die derart ausgebildet ist, dass der Zentralbereich aus dem parallelen Lichtstrahlenbündel in einer Ebene einen stetig aufgeweiteten Linienstrahl erzeugt.

Alternativ weist ein optischer Strahlteiler für ein längs einer Strahlachse paralleles Lichtstrahlenbündel einen transparenten Zentralbereich und mehrere, zur Strahlachse jeweils um einen Reflektorwinkel geneigte, reflektierende Reflektorflächen zur Erzeugung von je einem diskreten Punktstrahl auf, wobei der Zentralbereich zylindersegmentförmig mit einer Zylinderachse ausgebildet und die Zylinderachse senkrecht zu zumindest zwei Punktstrahlen orientiert ist. Erfindungsgemäß ist die Zylinderachse senkrecht zur Strahlachse orientiert und der Zentralbereich derart ausgebildet, dass aus dem parallelen Lichtstrahlenbündel in einer durch die zumindest zwei Punktstrahlen aufgespannten Ebene ein stetig aufgeweiteter Linienstrahl erzeugt wird.

Durch die zylindersegmentförmige Ausbildung des Zentralbereiches wird das achsparallele Teilstrahlenbündel in der Ebene der Zylinderachse stetig als Linienstrahl aufgeweitet sowie mit zwei weiteren Teilstrahlenbündeln mittels der Reflektorflächen je ein diskreter Punktstrahl erzeugt, wobei die Punktstrahlen zueinander einen definierten Bezugswinkel ausbilden und der Linienstrahl innerhalb einer durch die Punktstrahlen aufgespannten Ebene liegt.

Vorteilhaft bildet der zylindersegmentförmige Zentralbereich sowohl strahleingansseitig als auch strahlausgangsseitig Zylindersegmente aus, wodurch eine starke Winkelablenkung erfolgt.

Vorteilhaft ist der Segmentwinkel des strahleingansseitigen Zylindersegments größer als der des strahlausgangsseitigen Zylindersegments, wodurch eine räumliche Optimierung bezüglich des effektiven Strahlenganges innerhalb des Zentralbereich erfolgt.

Vorteilhaft ist die diffraktive Optik als Zylinderlinsenarray, bspw. in Form einer Fresnel-Linse oder als optisch aktive Microstruktur, bspw. in Form eines Hologramms oder Phasengitters ausgebildet, wodurch die Baulänge des optischen Strahlteilers längs der Strahlachse verkürzbar ist.

Vorteilhaft beträgt der Reflektorwinkel exakt 45° zu r Strahlachse, wodurch die Punktstrahlen senkrecht zur Strahlachse orientiert sind.

Vorteilhaft sind die einzelnen Reflektorflächen zueinander um die Strahlachse herum um ein Vielfaches von 90° versetzt, wodurch die Punktstrahl en zueinander einen Bezugswinkels von 90°, 180° oder 270° ausbilden.

Vorteilhaft sind genau zwei, diametral gegenüberliegende Reflektorflächen vorhanden, wodurch die zwei entgegenorientierten Punktstrahlen eine Halbebene begrenzen. Ein derartiger Strahlteiler ist vorteilhaft in einem Rotationsbaulaser einsetzbar, welcher in Verbindung mit einer feststellbaren Strahlachse ein kartesisches Koordinatensystem aufspannt.

Vorteilhaft ist der Strahlteiler körperlich einteilig ausgebildet, weiter vorteilhaft aus einer prismatischen Spritzgussoptik aus transparentem Kunststoff wie Polystyren mit versilberten Reflektorflächen, wodurch dieser einfach in hohen Stückzahlen herstellbar ist.

Alternativ vorteilhaft ist der Strahlteiler modular aus einen transparenter Vollzylinder, zumindest einem Prisma mit verspiegelten Reflektorflächen und optionalen weiteren Teilen zusammengefügt, wodurch optische Standardbauteile verwendbar sind.

Vorteilhaft sind zwei, bezüglich ihrer jeweiligen Zylinderachse zueinander senkrecht orientierte, derartige Strahlteiler benachbart nebeneinander in einem Positioniergerät angeordnet. Zwei derartig angeordnete Strahlteiler sind vorteilhaft in einem selbstnivellierenden Mehrachsbaulaser einsetzbar.

Die Erfindung wird bezüglich eines vorteilhaften Ausführungsbeispiels näher erläutert mit:
- Fig. 1: als Strahlteiler mit Strahlengang, im Schnitt
- Fig. 2: als Strahlteiler, in Perspektive
- Fig. 3a, 3b, 3c, 3d: als Varianten, in Perspektive
- Fig. 4: als Verwendung, in Seitenansicht

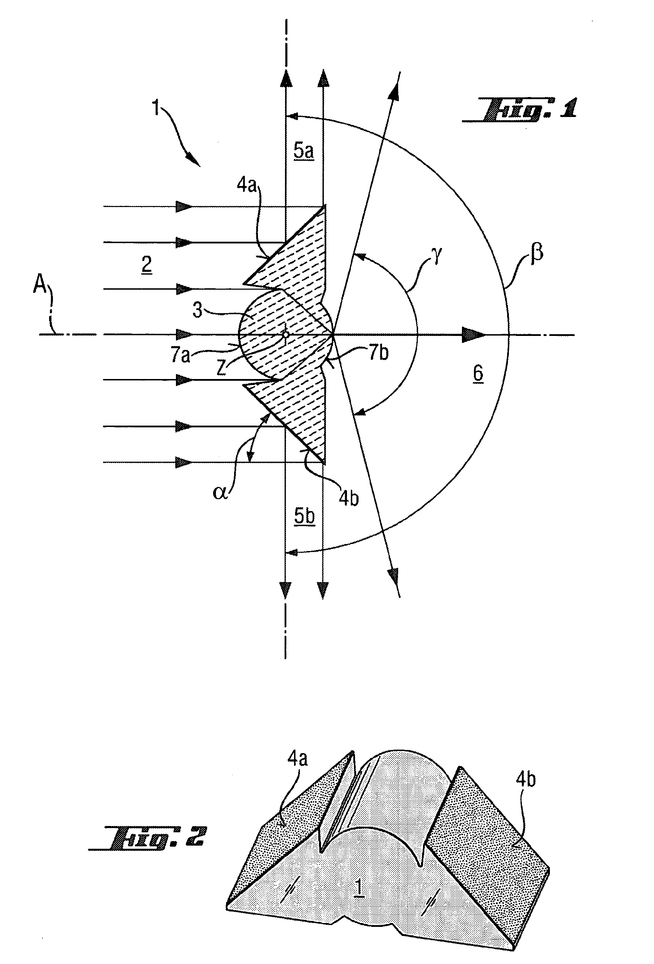

Nach Fig. 1 weist ein im Schnitt dargestellter optischer Strahlteiler 1 für ein längs einer Strahlachse A paralleles Lichtstrahlenbündel 2 einen transparenten Zentralbereich 3 und zwei, zur Strahlachse A jeweils um einen Reflektorwinkel α von exakt 45° geneigte, reflektierende Reflektorflächen 4a, 4b auf. Die beiden zueinander um die Strahlachse A herum um 180°versetzten Reflektorflächen 4a, 4b erzeugen zwei diskrete, entgegengesetzt gerichtete Punktstrahlen 5a, 5b, die zueinander einen definierten Bezugswinkel β von 180° ausbilden. Der zylindersegmentförmige Zentralbereich 3 erzeugt einen im Aufweitwinkel γ stetig aufgeweiteten Linienstrahl 6. Die senkrecht zur Darstellungsebelne liegende Zylinderachse Z des zylindersegmentförmigen Zentralbereiches 3, der strahleingansseitig ein großes Zylindersegment 7a und strahlausgangsseitig ein kleines Zylindersegment 7b ausbildet, ist senkrecht zur Strahlachse A und zu beiden Punktstrahlen 5a, 5b orientiert. Jeweils zwischen den Zylindersegmenten 7a, 7b sind die Reflektorflächen 4a, 4b mit dem Zentralbereich 3 verbunden.

Nach Fig. 2 ist der Strahlteiler 1 körperlich einteilig aus einer prismatischen Spritzgussoptik aus transparentem Polystyren mit oberflächlich versilberten Reflektorflächen 4a, 4b ausgebildet.

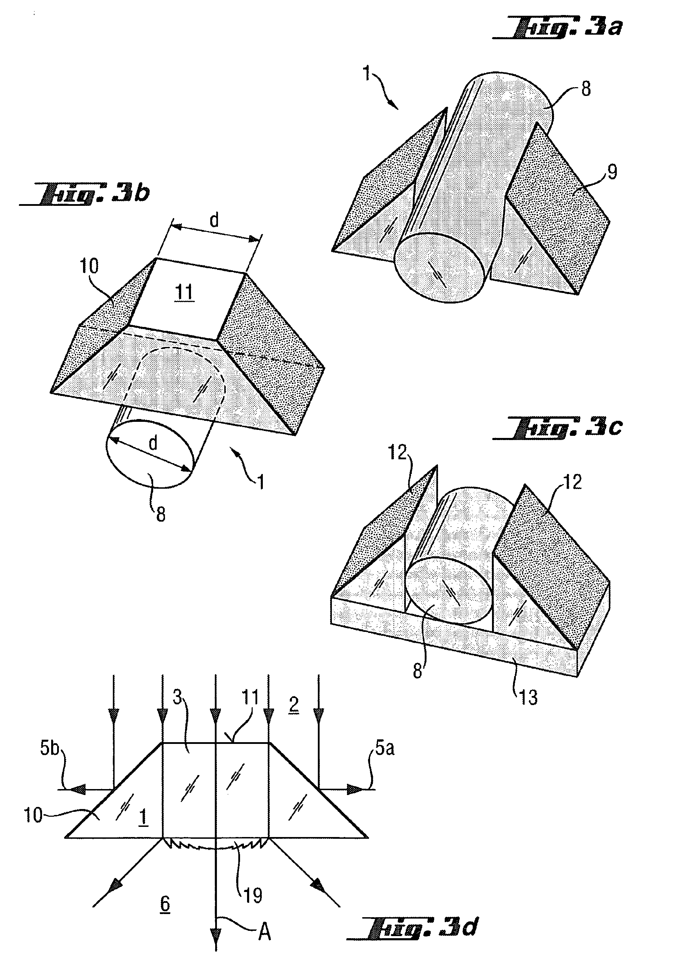

Nach den Fig. 3a, 3b, 3c ist der Strahlteiler 1 selbst modular zusammengesetzt und weist einen transparenten Vollzylinder 8 in Form einer Glaszylinderlinse auf, an welche nach Fig. 3a beidseitig spezielle prismatische Reflektoren 9 angeklebt sind. Nach Fig. 3b ist der Vollzylinder 8 des Durchmessers d an der, einer gleichbreiten Dachfläche 11 gegenüberliegenden Seite eines abgeflachten Rechteckprismas 10 aus Glas verbunden. Nach der Fig. 3c ist der Vollzylinder 8 zwischen zwei 45°-Prismen 12 angeordnet und gemeinsam mit diesen auf einer transparenten planparallelen Platte 13 montiert. Nach Fig. 3d weist der Zentralbereich 3 eines körperlich einteilig ausgebildeten Strahlteilers 1 strahlausgangsseitig an der, der Dachfläche 11 gegenüberliegenden, Seite des abgeflachten Rechteckprismas 10 eine gleichbreite, strahlaufweitende diffraktive Optik 19 in Form einer aus einem Zylinderlinsenarray bestehenden Fresnel-Linse auf, die aus dem längs einer Strahlachse A parallelen Lichtstrahlenbündel 2 einen stetig aufgeweiteten Linienstrahl 6 erzeugt.

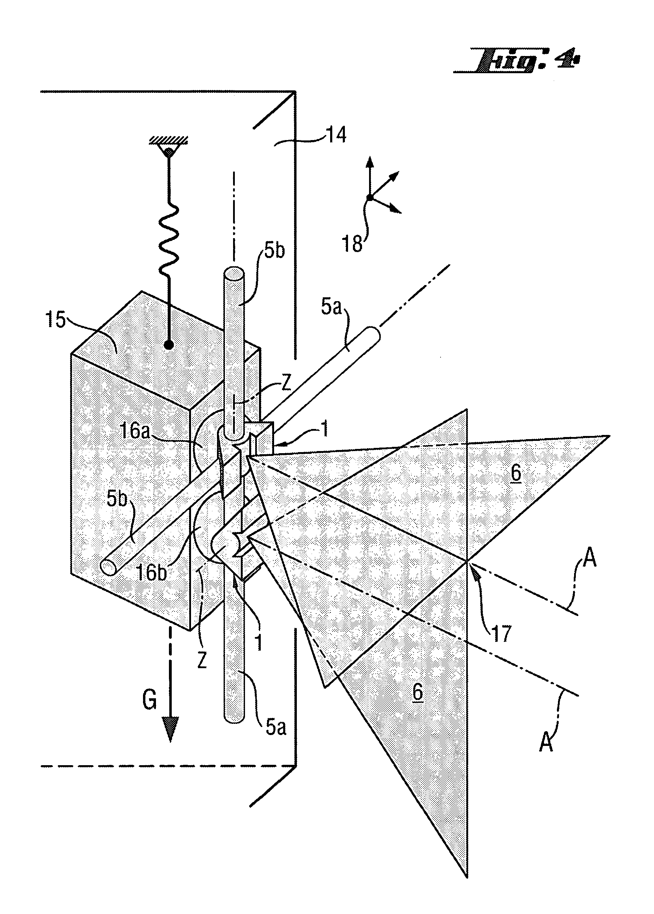

Nach Fig. 4 weist ein selbstnivellierender Mehrachsbaulaser 14 ein sich nach der Schwerkraft G ausrichtendes Pendel 15 mit zwei Laserdiodenoptiken 16a, 16b auf, die je als kollimierte Lichtstrahlquelle dienen. Den Laserdiodenoptiken 16a, 16b ist jeweils achsparallel ein Strahlteiler 1 zugeordnet, welcher je einen Linienstrahl 6 und zwei entgegengesetzt gerichtete Punktstrahlen 5a, 5b erzeugt. Die beiden um 90° zur jeweiligen Zylinderachse Z zueinander versetzt orientierten Strahlteiler 1 erzeugen gemeinsam vier zueinander um 90° versetzte Punktstrahlen 5a, 5b und einen zu diesen jeweils um 90° versetzten Kreuzstrahl 17, welcher aus zwei sich kreuzenden Linienstrahlen 6 ausgebildet ist. Die vier Punktstrahlen 5a, 5b und der Kreuzstrahl 17 spannen ein nach der Schwerkraft G nivelliertes, kartesisches Koordinatensystem 18 auf.

## Patentansprüche

1. Optischer Strahlteiler für ein längs einer Strahlachse (A) paralleles Lichtstrahlenbundel (2) mit einem transparenten Zentralbereich (3) und mehreren, zur Strahlachse (A) jeweils um einen Reflektorwinkel (α) geneigten, reflektierenden Reflektorflächen (4a, 4b) zur Erzeugung von je einem diskreten Punktstrahl (5a, 5b), **dadurch gekennzeichnet, dass** der Zentralbereich (3) eine strahlaufweitende diffraktive Optik (19) aufweist, wobei die strahlaufweitende diffraktive Optik (19) derart ausgebildet ist, dass der Zentralbereich (3) aus dem parallelen Lichtstrahlenbündel (2) in einer Ebene einen stetig aufgeweiteten Linienstrahl (6) erzeugt.

2. Optischer Strahlteiler für ein längs einer Strahlachse (A) paralleles Lichtstrahlenbündel (2) mit einem transparenten Zentralbereich (3) und mehreren, zur Strahlachse (A) jeweils um einen Reflektorwinkel (α) geneigten, reflektierenden Reflektorflächen (4a, 4b) zur Erzeugung von je einem diskreten Punktstrahl (5a, 5b), wobei der Zentralbereich (3) zylindersegmentförmig mit einer Zylinderachse (Z) ausgebildet und die Zylinderachse (Z) senkrecht zu zumindest zwei Punktstrahlen (5a, 5b) orientiert ist, **dadurch gekennzeichnet, dass** die Zylinderachse (Z) senkrecht zur Strahlachse (A) orientiert und der Zentralbereich (3) derart ausgebildet ist, dass aus dem parallelen Lichtstrahlenbündel (2) in einer durch die zumindest zwei Punktstrahlen (5a, 5b) aufgespannten Ebene ein stetig aufgeweiteter Linienstrahl (6) erzeugt wird.

3. Strahlteiler nach Anspruch 2, **dadurch gekennzeichnet, dass** der zylinderseigmentförmige Zentralbereich (3) sowohl strahleingansseitig als auch strahlausgangsseitig Zylindersegmente (7a, 7b) ausbildet, und dass optional das strahleingansseitige Zylindersegment (7a) größer als das strahlausgangsseitige Zylindersegment (7b) ist.

4. Strahlteiler nach einem der vorherigen Ansprüche, **dadurch gekennzeichnet, dass** der Reflektorwinkel (α) exakt 45° zur Strahlachse (A) beträgt und dass optional die einzelnen Reflektorflächen (4a, 4b) zueinander um die Strahlachse (A) herum um ein Vielfaches von 90° versetzt sind.

5. Strahlteiler nach einem der vorherigen Ansprüche, **dadurch gekennzeichnet, dass** genau zwei, diametral gegenüberliegende Reflektorflächen (4a, 4b) vorhanden sind.

6. Strahlteiler nach einem der vorherigen Ansprüche, **dadurch gekennzeichnet, dass** er körperlich einteilig mit verspiegelten Reflektorflächen (4a, 4b) ausgebildet ist.

7. Strahlteiler nach einem der Ansprüche 2 bis 5, **dadurch gekennzeichnet, dass** er modular aus einen transparenten Vollzylinder (8), zumindest einem Prisma (9, 10, 12) mit verspiegelten Reflektorflächen (4a, 4b) und optionalen weiteren Teilen zusammengefügt ist.

8. Positioniergerät (14), umfassend einen Strahlteiler nach einem der vorherigen Ansprüche.

9. Positioniergerät (14) nach Anspruch 8, **dadurch gekennzeichnet, dass** zu dem Strahlteiler ein weiterer Strahlteiler (1) angeordnet ist, dessen Zylinderachse (Z) um 90° versetzt orientiert ist.

## Claims

1. Optical beam splitter for a parallel light beam bundle (2) along a beam axis (A) with a transparent central area (3) and several reflective reflector surfaces (4a, 4b), each inclined by a reflector angle (a), to produce a discrete spot beam (5a, 5b) each, **characterised in that** the central area (3) has beam widening diffractive optics (19), in which the beam widening diffractive optics (19) are made in such a way that the central area (3) produces a constantly widened line beam (6) from the parallel light beam bundle (2) in a plane.

2. Optical beam splitter for a parallel light beam bundle (2) along a beam axis (A) with a transparent central area (3) and several reflective reflector surfaces (4a, 4b), each inclined by a reflector angle (α), to produce a discrete spot beam (5a, 5b) each, in which the central area (3) is made in the form of a cylinder segment with a cylinder axis (Z) and the cylinder axis (Z) is directed vertically to at least two spot beams (5a, 5b), **characterised in that** the cylinder axis (Z) is directed vertically to the beam axis (A) and the central area (3) is made in such a way that a constantly widened line beam (6) is produced from the parallel light beam bundle (2) in a plane spread out through at least two spot beams (5a, 5b).

3. Beam splitter according to claim 2, **characterised in that** the cylinder segment shaped central area (3) forms cylinder segments (7a, 7b) on both the beam input side and the beam output side and that as an option the cylinder segment (7a) on the beam input side is greater than the cylinder segment (7b) on the beam output side.

4. Beam splitter according to one of the previous claims, **characterised in that** the reflector angle (α) is precisely 45° to the beam axis (A) and that as an option the individual reflector surfaces (4a, 4b) are offset to each other around the beam axis (A) by a multiple of 90°.

5. Beam splitter according to the previous claims, **characterised in that** there are precisely two diametrically opposite reflector surfaces (4a, 4b).

6. Beam splitter according to one of the previous claims, **characterised in that** physically it is made in one piece with reflected reflector surfaces (4a, 4b).

7. Beam splitter according to one of claims 2 to 5, **characterised in that** it is joined together in a modular way from a transparent full cylinder (8), at least one prism (9, 10, 12) with reflected reflector surfaces (4a, 4b) and further parts as an option.

8. Positioning device (14), comprising a beam splitter according to one of the previous claims

9. Positioning device (14) according to claim 8, **characterised in that** a further beam splitter (1) is allocated to the beam splitter, the cylinder axis (Z) of which is offset by 90°.

## Revendications

1. Séparateur de faisceau optique pour un groupe de faisceaux lumineux (2) parallèles le long d'un axe de faisceau (A), comportant une zone centrale transparente (3) et plusieurs surfaces de réflexion réfléchissantes (4a, 4b) respectivement inclinées d'un angle de réflexion (α) par rapport à l'axe de faisceau (A) pour générer chacune un faisceau ponctuel discret (5a, 5b), **caractérisé en ce que** la zone centrale (3) comporte un composant optique diffringent élargissant le faisceau (19), dans lequel le composant optique diffringent élargissant le faisceau (19) est conçu de telle sorte que la zone centrale (3) génère dans un plan un faisceau linéaire constamment élargi (6) à partir du groupe de faisceaux lumineux parallèles (2).

2. Séparateur de faisceau optique pour un groupe de faisceaux lumineux (2) parallèles le long d'un axe de faisceau (A), comportant une zone centrale transparente (3) et plusieurs surfaces de réflexion réfléchissantes (4a, 4b) respectivement inclinées d'un angle de réflexion (α) par rapport à l'axe de faisceau (A) pour générer chacune un faisceau ponctuel discret (5a, 5b), dans lequel la zone centrale (3) est configurée en forme de segment cylindrique avec un axe de cylindre (Z) et l'axe de cylindre (Z) est orienté perpendiculairement à au moins deux faisceaux ponctuels (5a, 5b), **caractérisé en ce que** l'axe de cylindre (Z) est orienté perpendiculairement à l'axe de faisceau (A) et la zone centrale (3) est configurée de telle sorte qu'un faisceau linéaire constamment élargi (6) est généré à partir du groupe de faisceaux lumineux parallèles (2) dans un plan défini par les au moins deux faisceaux ponctuels (5a, 5b).

3. Séparateur de faisceau selon la revendication 2, **caractérisé en ce que** la zone centrale en forme de segment cylindrique (3) forme des segments cylindriques (7a, 7b) aussi bien du côté de l'entrée de faisceau que du côté de la sortie de faisceau, et **en ce que** le segment cylindrique (7a) du côté de l'entrée de faisceau est facultativement plus grand que le segment cylindrique (7b) du côté de la sortie de faisceau.

4. Séparateur de faisceau selon l'une quelconque des revendications précédentes, **caractérisé en ce que** l'angle de réflexion (α) est exactement de 45° par rapport à l'axe de faisceau (A), et **en ce que** les surfaces de réflexion individuelles (4a, 4b) sont facultativement décalées l'une par rapport à l'autre autour de l'axe de faisceau (A) d'un multiple de 90°.

5. Séparateur de faisceau selon l'une quelconque des revendications précédentes, **caractérisé en ce qu'**il existe exactement deux surfaces de réflexion diamétralement opposées (4a, 4b).

6. Séparateur de faisceau selon l'une quelconque des revendications précédentes, **caractérisé en ce qu'**il est physiquement formé d'un seul tenant avec les surfaces de réflexion (4a, 4b) revêtues d'une couche spéculaire.

7. Séparateur de faisceau selon l'une quelconque des revendications 2 à 5, **caractérisé en ce qu'**il est assemblé de manière modulaire à partir d'un cylindre plein transparent (8), d'au moins un prisme (9, 10, 12) muni de surfaces de réflexion (4a, 4b) revêtues d'une couche spéculaire, et d'autres pièces facultatives.

8. Appareil de positionnement (14), comportant un séparateur de faisceau selon l'une quelconque des revendications précédentes.

9. Appareil de positionnement (14) selon la revendication 8, **caractérisé en ce que** le séparateur de faisceau comporte un séparateur de faisceau supplémentaire (1) dont l'axe de cylindre (Z) est orienté décalé de 90°.
